# EUROPEAN PATENT APPLICATION

(11) **EP 4 481 143 A1**
(43) Date of publication of application: **25.12.2024**
(21) Application number: 23382629.6
(22) Date of filing: 21.06.2023
(51) Int. Cl.: E04H 12/12, E04H 12/16, F03D 13/20

(54) **STEEL PLATE OF A CONCRETE SECTION OF A WIND TURBINE TOWER, SUBSET OF A WIND TURBINE TOWER, WIND TURBINE AND METHOD OF ASSEMBLING OF A WIND TURBINE**

(71) Applicant: Nordex Energy Spain, S.A.U., 31395 Barasoain (Navarra) (ES)
(72) Inventor: Garduño, Aitor, Barasoain (ES); Garcia, Ivan, Barasoain (ES); Cerrillo, Vanessa, Barasoain (ES); Astrain, Diego, Barasoain (ES); Gallego, Miguel Angel, Barasoain (ES); Varela, Fernando, Barasoain (ES); Rubio Guillen, Iñigo, Barasoain (ES); Arlabán, Teresa, Barasoain (ES)
(74) Representative: Pons

(57) **Abstract**

The object of the invention is a steel plate of a section of a wind turbine tower which reinforces the upper part of the section of the tower of the wind turbine, and also a subset of a wind turbine tower comprising the steel plate, the wind turbine comprising the subset and a method of assembling of a wind turbine comprising the steel plate.

## Description

### OBJECT OF THE INVENTION

The object of the invention is a steel plate of a section of a wind turbine tower which reinforces the upper part of the section of the tower of the wind turbine.

The invention also relates to a subset of a wind turbine tower comprising the steel plate, the wind turbine comprising the subset and a method of assembling of a wind turbine comprising the steel plate.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those to produce steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

It is known in the state of the art, the towers for wind turbines being of the kind of "concrete-steel hybrid" towers comprising a first tower section comprising at least two concrete segments and further comprising a second tower section made of steel, the tower further comprising an adapter for connecting the two tower sections, and the towers for wind turbines being of the kind of "full-concrete" towers comprising an adapter disposed in the upper part of the upper concrete tower section and below a wind turbine component, the wind turbine component being preferably the yaw bearing of the nacelle.

In a first embodiment, the adapter comprises an annular concrete element and a steel element that has at least one annular flange, wherein the flange covers an upper surface of the concrete element of the adapter in installation position. Consequently, this adapter consists of concrete and steel, in which case the steel element is cast directly with the concrete element of the adapter. Here, the annular flange of the steel element is fully grouted in the concrete without air inclusions. In a related method for building the tower, the steel element with an annular flange is initially provided for building the adapter, which is installed headlong in a ring-shaped formwork. Afterwards, concrete is placed in the formwork and as a result of that, the annular concrete element of the adapter can be made. Here, the concrete is placed directly on the underside of the flange so that, in the finished adapter, the flange is fully grouted establishing a connection between the concrete element and the steel element of the adapter.

In a second embodiment, the adapter is made entirely of steel, and a grout layer must be disposed between the adapter and the first tower section made of concrete to establish a connection between the steel adapter and the concrete section.

However, this grout layer must be levelled for the right assembly of the adapter onto the concrete section, increasing the assembly times and consequently the associated costs. Furthermore, cracks in the concrete section may appear due to the tightening of the bolts intended to join the adapter and the concrete section.

The present invention solves the problems described above.

### DESCRIPTION OF THE INVENTION

The invention relates to a steel plate of a section of a wind turbine tower which reinforces the upper part of the section of the tower of the wind turbine.

The steel plate is intended to be disposed on a concrete section of a wind turbine tower, wherein the wind turbine tower comprises at least one concrete section comprising at least one concrete segment, and a steel adapter disposed above the at least one concrete section, and
wherein the steel plate comprises:
- at least one essentially vertical flange, wherein in use, the at least one essentially vertical flange is intended to be disposed adjacent to, at least partially, an essentially vertical upper surface of the at least one concrete segment of the at least one concrete section, and
- a horizontal flange, wherein in use, the horizontal flange is intended to be disposed onto, at least partially, a horizontal upper surface of the at least one concrete segment of the at least one concrete section.

In this way, the steel plate so constituted allows to reinforce the upper part of the at least one concrete section of a tower of a wind turbine.

Moreover, the horizontal flange of the steel plate defines a levelled horizontal upper surface for the concrete section, also allowing to hoist the steel adapter already connected to the concrete section, if necessary, since the steel adapter is intended to be disposed, at least partially, onto the horizontal flange of the steel plate.

Optionally, the steel plate comprises two essentially vertical flanges being an internal essentially vertical flange and an external essentially vertical flange, wherein in use, the internal essentially vertical flange is intended to be disposed adjacent to an internal essentially vertical upper surface of the at least one concrete segment of the at least one concrete section, and the external essentially vertical flange is intended to be disposed adjacent to an external essentially vertical upper surface of the at least one concrete segment of the at least one concrete section.

Optionally, the at least one essentially vertical flange comprises a lower end, wherein in use, the lower end is intended to be disposed adjacent to a horizontal circumferential surface of the at least one concrete segment of the at least one concrete section that together with the essentially vertical upper surface of the at least one concrete segment of the at least one concrete section define a groove wherein the essentially vertical flange of the steel plate is disposed.

Optionally, the steel plate further comprises joining means configured to join the at least one essentially vertical flange and the horizontal flange. Preferably, the joining means are a weld. Also preferably, the joining means are formed by casting the at least one essentially vertical flange and the horizontal flange. Also preferably, the joining means are bolts. Optionally, the at least one essentially vertical flange and/or the horizontal flange comprise/s an external surface, wherein the steel plate further comprises a coating disposed at least on the external surface of the at least one essentially vertical flange and/or the horizontal flange.

Optionally, the at least one essentially vertical flange is partially cylindrical in shape.

Optionally, the horizontal flange is in the shape of partial circular crown.

Optionally, the at least one essentially vertical flange comprises a height and the at least one concrete segment comprises a height, wherein a ratio between the height of the at least one essentially vertical flange and the height of the at least one concrete segment is between 0,01 and 0,05.

Optionally, the at least one essentially vertical flange comprises a thickness and the horizontal flange comprises a thickness, wherein a ratio between the thickness of the at least one essentially vertical flange and the thickness of the horizontal flange is between 0,5 and 1.

Optionally, the steel plate further comprises a first set of holes intended to accommodate tendons passing through the at least one concrete section; and/or a second set of holes intended to accommodate bolts configured to join the adapter to the at least one concrete section. Preferably, the first set of holes and/or the second set of holes are through holes.

Preferably, the first set of holes and the second set of holes are contained in a circular crown with a difference between the bigger radius and the lower radius less than 0,05m.

Preferably, the first set of through holes and the second set of through holes are distributed along a single circumferential row.

Optionally, the steel plate further comprises levelling holes intended to enable the injection of a levelling material, preferably grout, between the steel plate and the at least one concrete segment of the at least one concrete section, allowing for levelling of the horizontal upper surface of the at least one concrete segment of the at least one concrete section by means of the steel plate, and in consequence, the disposition of the adapter onto the concrete section, previously or after the lifting of the at least one concrete section to its height along the tower of the wind turbine. In the first case, the steel adapter can be together with the at least one concrete section.

Optionally, the steel plate further comprises handling holes configured to allow the handling of the steel plate.

Optionally, the steel plate further comprises airing holes configured to allow the aeration of the levelling material.

The invention also relates to a subset of a tower of a wind turbine comprising at least one concrete section comprising at least one concrete segment and at least one steel plate as described above.

The subset also comprises a levelling material disposed between the at least one steel plate and the at least one concrete segment of the at least one concrete section.

Optionally, the at least one concrete section of the subset comprises at least two concrete segments, preferably three concrete segments, and at least two steel plates, preferably three steel plates, wherein each steel plate comprises:
- at least one essentially vertical flange, wherein the at least one essentially vertical flange is disposed adjacent to, at least partially, an essentially vertical upper surface of one concrete segment of the at least one concrete section, and
- a horizontal flange, wherein the horizontal flange is disposed onto, at least partially, a horizontal upper surface of one concrete segment of the at least one concrete section.

Optionally, the at least two steel plates are joined forming a single steel plate.

Optionally, the at least one essentially vertical flange of each one of the three steels plates is partially cylindrical in shape defining an arc of 60°.

Optionally, the horizontal flange of each one of the three steels plates is in the shape of partial circular crown defining an arc of 60°.

Optionally, the at least one concrete section comprises at least two vertical joints, preferably three vertical joints, disposed between the at least two concrete segments, preferably between each pair of adjacent concrete segments, wherein each one of the at least two vertical joints, preferably each one of the three vertical joints is adjacent to two steel plates.

Optionally, the horizontal flanges of the steel plates are levelled at the same height. In this way, the steel adapter can be directly disposed onto the horizontal flanges of the steel plates.

Optionally, the at least one concrete segment further comprises an internal vertical surface comprising an upper groove defined by an internal horizontal circumferential surface and an upper stretch, wherein a radius of the upper stretch is greater than a radius of the internal vertical surface.

Optionally, the at least one concrete segment further comprises an external vertical surface comprising an upper groove defined by an external horizontal circumferential surface and an upper stretch, wherein a radius of the upper stretch is lower than a radius of the external vertical surface.

The invention also relates to a method of assembling a wind turbine tower, the tower comprising at least one concrete section comprising at least one concrete segment, and a steel adapter disposed above the at least one concrete section,
wherein the method comprises:
- a step of disposing at least one steel plate onto at least a concrete segment of the at least one concrete section, which in turn comprises:
   - a step of disposing at least one essentially vertical flange of the at least one steel plate adjacent to, at least partially, an essentially vertical upper surface of at least one concrete segment of the at least one concrete section, and
   - a step of disposing a horizontal flange of the at least one steel plate onto, at least partially, a horizontal upper surface of the at least one concrete segment of the at least one concrete section.

Optionally, the method further comprises a step of disposing the steel adapter onto the at least one steel plate.

Optionally, the method further comprises a step of lifting the at least one concrete segment of the at least one concrete section, wherein the step of disposing the at least one steel plate onto the at least a concrete segment of the at least one concrete section is carried out before or after the step of lifting the at least one concrete segment of the at least one concrete section.

Optionally, the step of disposing the steel adapter onto the at least one steel plate is carried out before or after the step of lifting at least one concrete segment of the at least one concrete section.

Optionally, the method further comprises a step of levelling the at least one steel plate onto the at least one concrete segment of the at least one concrete section.

Optionally, the step of levelling the at least one steel plate onto the at least one concrete segment of the at least one concrete section comprises a step of injecting a levelling material between the at least one steel plate and the at least one concrete segment of the at least one concrete section.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:
Figure 1 shows a perspective view of the steel plate according to a preferred embodiment of the invention.
Figure 2 shows a plan view of the steel plate of Figure 1.
Figure 3 shows a section view BB of the steel plate of Figure 2 before the arrangement of the joining means configured to join the at least one essentially vertical flange and the horizontal flange.
Figure 4 shows the section view CC of the steel plate of Figure 2 after the disposition of the joining means configured to join the at least one essentially vertical flange and the horizontal flange.
Figure 5 shows an elevation view of a tower of a wind turbine comprising a subset of a tower comprising a concrete section which in turn comprises three concrete segments and three steel plates of Figure 1.
Figure 6 shows a detail of section LL of Figure 5.
Figure 7 shows a section JJ of Figure 6.
Figure 8 shows a detail Z of Figure 7 wherein only the concrete segment is shown.

### PREFERRED EMBODIMENT OF THE INVENTION

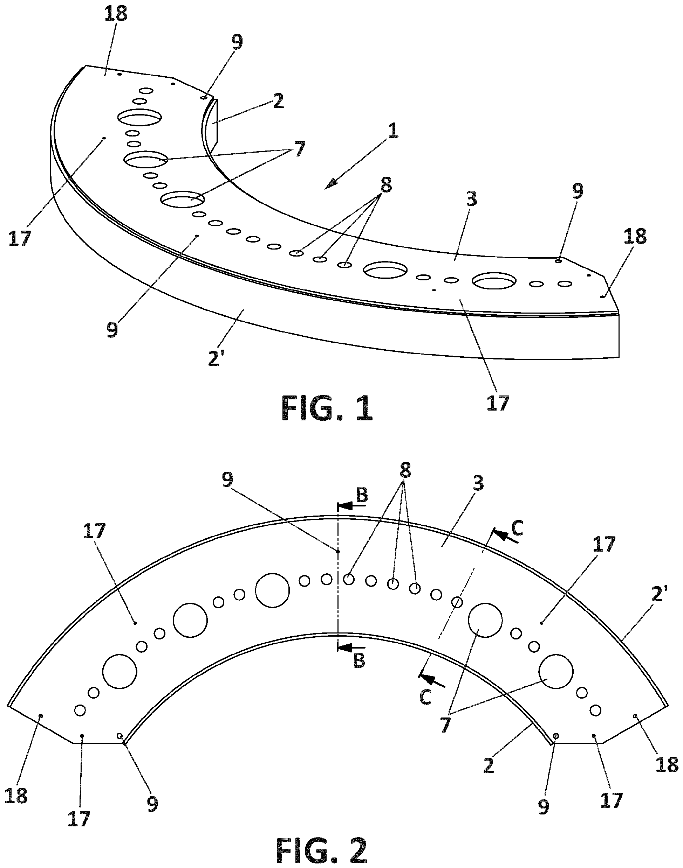

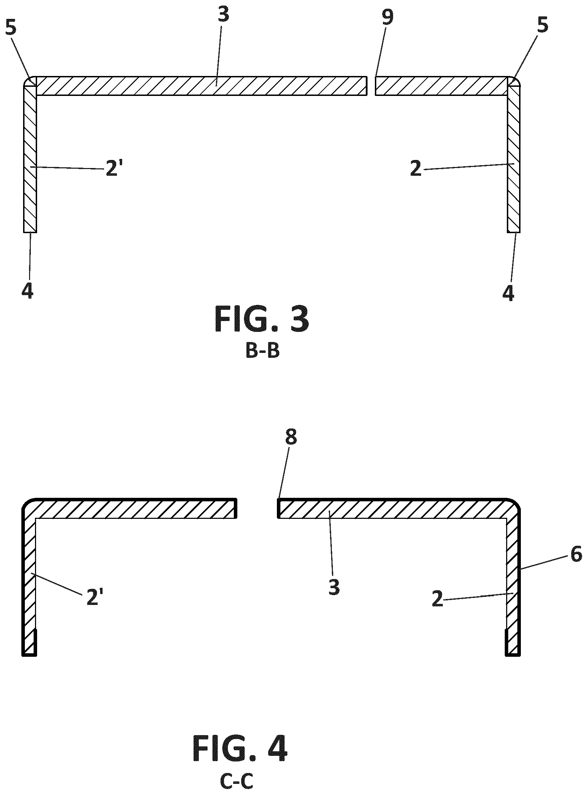

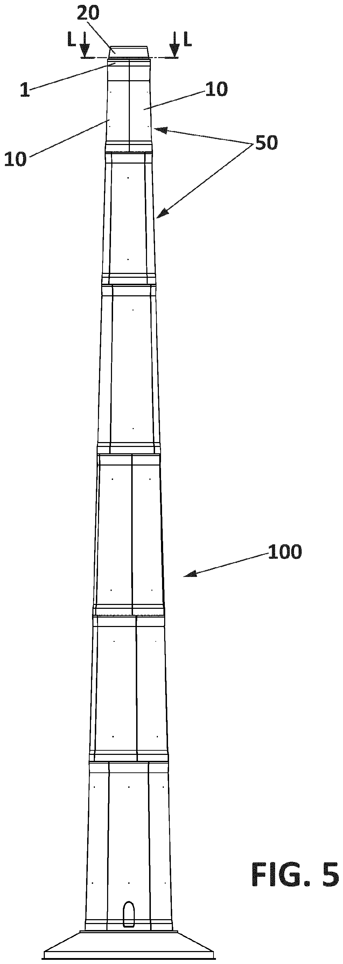

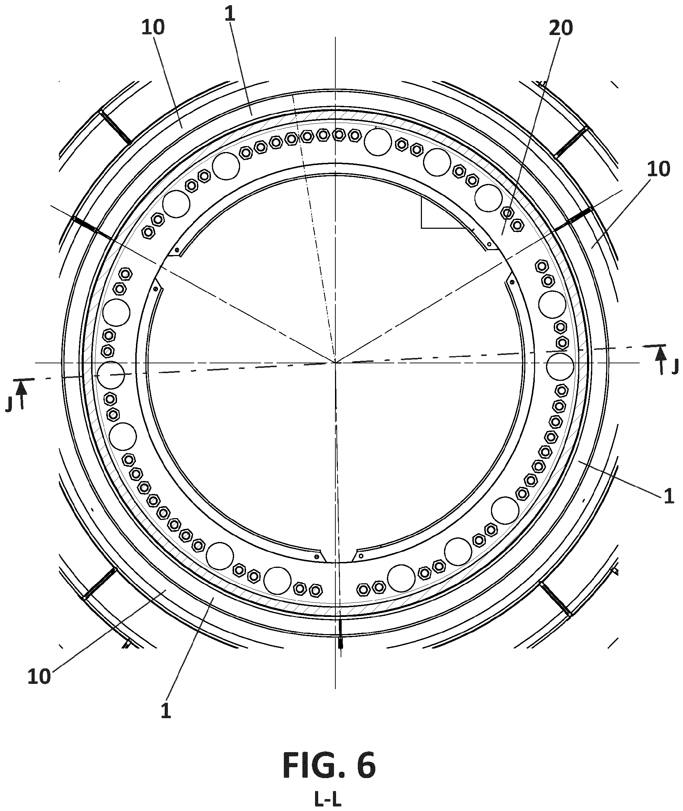

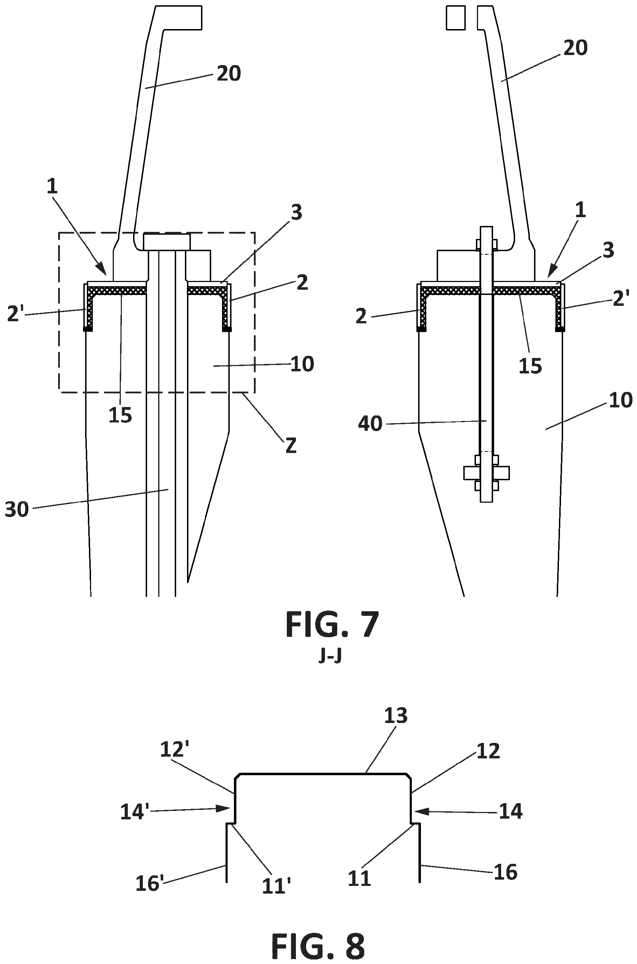

The following is a detailed description of the steel plate (1) of the invention according to a preferred embodiment shown in Figures 1 to 7, of the subset of a tower (100) of a wind turbine comprising at least one concrete section (50) which in turn comprises at least one concrete segment (10) and at least one steel plate (1) according to a preferred embodiment shown in Figure 5 to 7 and the tower (100) of a wind turbine shown in Figure 5 comprising the at least one concrete segment (10) shown in Figure 8.

The steel plate (1) of a section of a wind turbine tower (100), wherein the wind turbine tower (100) comprises at least one concrete section (50) comprising at least one concrete segment (10), and a steel adapter (20) disposed above the at least one concrete section (50), comprises:
- at least one essentially vertical flange (2, 2'), wherein in use, the at least one essentially vertical flange (2, 2') is intended to be disposed adjacent to, at least partially, an essentially vertical upper surface (12, 12') of the at least one concrete segment (10) of the at least one concrete section (50), and
- a horizontal flange (3), wherein in use, the horizontal flange (3) is intended to be disposed onto, at least partially, a horizontal upper surface (13) of the at least one concrete segment (10) of the at least one concrete section (50).

Preferably, the steel plate (1) comprises two essentially vertical flanges (2, 2') being an internal essentially vertical flange (2) and an external essentially vertical flange (2'), wherein in use, the internal essentially vertical flange (2) is intended to be disposed adjacent to an essentially internal vertical upper surface (12) of the at least one concrete segment (10) of the at least one concrete section (50), and the external essentially vertical flange (2') is intended to be disposed adjacent to an essentially external vertical upper surface (12') of the at least one concrete segment (10) of the at least one concrete section (50).

The at least one essentially vertical flange (2, 2') comprises a lower end (4, 4'), wherein in use, the lower end (4, 4') is intended to be disposed adjacent to a horizontal circumferential surface (11, 11') of the at least one concrete segment (10) of the at least one concrete section (50) that together with the essentially vertical upper surface (12, 12') of the at least one concrete segment (10) of the at least one concrete section (50) define a groove (14, 14') wherein the essentially vertical flange (2, 2') of the steel plate (1) is disposed.

The steel plate (1) further comprises joining means (5) configured to join the at least one essentially vertical flange (2, 2') and the horizontal flange (3).

The at least one essentially vertical flange (2, 2') and/or the horizontal flange (3) comprise/s an external surface, wherein the steel plate (1) further comprises a coating (6) disposed at least on the external surface of the at least one essentially vertical flange (2, 2') and/or the horizontal flange (3).

The steel plate (1) comprises a first set of holes (7) intended to accommodate tendons (30) passing through the at least one concrete section (50) and/or a second set of holes (8) intended to accommodate bolts (40) configured to join the adapter (20) to at least one concrete section (50), and/or levelling holes (9) intended to enable the injection of a levelling material (15) between the steel plate (1) and the at least one concrete segment (10) of the at least one concrete section (50) and/or handling holes (17) configured to allow the handling of the steel plate (1) and/or airing holes (18) configured to allow the aeration of a levelling material (15).

Preferably, the subset of a tower (100) of a wind turbine comprises at least one concrete section (50) which in turn comprises three concrete segments (10) and three steel plates (1), wherein each steel plate (1) comprises:
- two essentially vertical flanges (2, 2'), wherein the two essentially vertical flanges (2, 2') are disposed each one of them adjacent to, at least partially, an essentially vertical upper surface (12, 12') of one concrete segment (10) of the at least one concrete section (50), and
- a horizontal flange (3), wherein the horizontal flange (3) is disposed onto, at least partially, a horizontal upper surface (13) of one concrete segment (10) of the at least one concrete section (50).

The subset further comprises a levelling material (15) disposed between the three steel plates (1) and the three concrete segments (10) of the at least one concrete section (50), wherein preferably, the horizontal flanges (3) of the steel plates (1) are levelled at the same height.

Each one of the concrete segments (10) further comprises an internal vertical surface (16) comprising an upper groove (14) defined by an internal horizontal circumferential surface (11) and an upper stretch (12), wherein a radius of the upper stretch (12) is greater than a radius of the internal vertical surface (16); and
an external vertical surface (16') comprising an upper groove (14') defined by an external horizontal circumferential surface (11') and an upper stretch (12'), wherein a radius of the upper stretch (12') is lower than a radius of the external vertical surface (16').

## Claims

1. Steel plate (1) of a section of a wind turbine tower (100), wherein the wind turbine tower (100) comprises at least one concrete section (50) comprising at least one concrete segment (10), and a steel adapter (20) disposed above the at least one concrete section (50), and
characterised int that the steel plate (1) comprises:
- at least one essentially vertical flange (2, 2'), wherein in use, the at least one essentially vertical flange (2, 2') is intended to be disposed adjacent to, at least partially, an essentially vertical upper surface (12, 12') of the at least one concrete segment (10) of the at least one concrete section (50), and
- a horizontal flange (3), wherein in use, the horizontal flange (3) is intended to be disposed onto, at least partially, a horizontal upper surface (13) of the at least one concrete segment (10) of the at least one concrete section (50).

2. The steel plate (1) of claim 1 comprising two essentially vertical flanges (2, 2') being an internal essentially vertical flange (2) and an external essentially vertical flange (2'), wherein in use, the internal essentially vertical flange (2) is intended to be disposed adjacent to an essentially internal vertical upper surface (12) of the at least one concrete segment (10) of the at least one concrete section (50), and the external essentially vertical flange (2') is intended to be disposed adjacent to an essentially external vertical upper surface (12') of the at least one concrete segment (10) of the at least one concrete section (50).

3. The steel plate (1) of any one of claim 1 or 2, wherein the at least one essentially vertical flange (2, 2') comprises a lower end (4, 4'), wherein in use, the lower end (4, 4') is intended to be disposed adjacent to a horizontal circumferential surface (11, 11') of the at least one concrete segment (10) of the at least one concrete section (50) that together with the essentially vertical upper surface (12, 12') of the at least one concrete segment (10) of the at least one concrete section (50) define a groove (14, 14') wherein the essentially vertical flange (2, 2') of the steel plate (1) is disposed.

4. The steel plate (1) of any one of claim 1 to 3 further comprising joining means (5) configured to join the at least one essentially vertical flange (2, 2') and the horizontal flange (3).

5. The steel plate (1) of any one of claim 1 to 4, wherein the at least one essentially vertical flange (2, 2') and/or the horizontal flange (3) comprise/s an external surface, wherein the steel plate (1) further comprises a coating (6) disposed at least on the external surface of the at least one essentially vertical flange (2, 2') and/or the horizontal flange (3).

6. The steel plate (1) of any one of claim 1 to 5, wherein the horizontal flange (3) further comprising a first set of holes (7) intended to accommodate tendons (30) passing through the at least one concrete section (50) and/or a second set of holes (8) intended to accommodate bolts (40) configured to join the adapter (20) to at least one concrete section (50).

7. The steel plate (1) of claim 6, wherein the first set of holes (7) and the second set of holes (8) are contained in a circular crown with a difference between the bigger radius and the lower radius less than 0,05m.

8. The steel plate (1) of any one of claim 1 to 7 further comprising levelling holes (9) intended to enable the injection of a levelling material (15) between the steel plate (1) and the at least one concrete segment (10) of the at least one concrete section (50).

9. The steel plate (1) of any one of claim 1 to 8 further comprising airing holes (18) configured to allow the aeration of a levelling material (15).

10. Subset of a tower (100) of a wind turbine comprising at least one concrete section (50) which in turn comprises at least one concrete segment (10) and at least one steel plate (1) of any one of the previous claims.

11. The subset of claim 10 further comprising a levelling material (15) disposed between the at least one steel plate (1) and the at least one concrete segment (10) of the at least one concrete section (50).

12. The subset of any one of claims 10 or 11, wherein the at least one concrete section (50) of the subset comprises at least two concrete segments (10), preferably three concrete segments (10), and at least two steel plates (1), preferably three steel plates (1), wherein each steel plate (1) comprises:
- at least one essentially vertical flange (2, 2'), wherein the at least one essentially vertical flange (2, 2') is disposed adjacent to, at least partially, an essentially vertical upper surface (12, 12') of one concrete segment (10) of the at least one concrete section (50), and
- a horizontal flange (3), wherein the horizontal flange (3) is disposed onto, at least partially, a horizontal upper surface (13) of one concrete segment (10) of the at least one concrete section (50).

13. The subset of any one of claims 10 to 12, wherein the horizontal flanges (3) of the steel plates (1) are levelled at the same height.

14. The subset of any one of claims 10 to 13, wherein the at least one concrete segment (10) further comprises:
an internal vertical surface (16) comprising an upper groove (14) defined by an internal horizontal circumferential surface (11) and an upper stretch (12), wherein a radius of the upper stretch (12) is greater than a radius of the internal vertical surface (16); and
an external vertical surface (16') comprising an upper groove (14') defined by an external horizontal circumferential surface (11') and an upper stretch (12'), wherein a radius of the upper stretch (12') is lower than a radius of the external vertical surface (16').

15. Wind turbine comprising a tower (100) which in turn comprises at least a subset according to any one of claims 10 to 14.

16. Method of assembling a wind turbine tower (100), the tower 100) comprising at least one concrete section (50) comprising at least one concrete segment (10), and a steel adapter (20) disposed above the at least one concrete section (50),
wherein the method comprises:
- a step of disposing at least one steel plate (1) onto at least a concrete segment (10) of the at least one concrete section (50), which in turn comprises:
- a step of disposing at least one essentially vertical flange (2, 2') of the at least one steel plate (1) adjacent to, at least partially, an essentially vertical upper surface (12, 12') of at least one concrete segment (10) of the at least one concrete section (50), and
- a step of disposing a horizontal flange (3) of the at least one steel plate (1) onto, at least partially, a horizontal upper surface (13) of the at least one concrete segment of the at least one concrete section (50).
